# EUROPEAN PATENT SPECIFICATION

(11) **EP 1 943 902 B1**
(45) Date of publication and mention of the grant of the patent: **14.10.2009**
(21) Application number: 07113788.9
(22) Date of filing: 03.08.2007
(51) Int. Cl.: A21B 3/04, F24C 15/32

(54) **Steam generator, heating cooker having the same and control method thereof**
Dampferzeuger, Kochgerät damit und Steuerverfahren dafür
Générateur de vapeur, cuiseur électrique en étant équipé et son procédé de contrôle

(30) Priority: 08.01.2007 KR 20070002142
(43) Date of publication of application: 16.07.2008
(73) Proprietor: Samsung Electronics Co., Ltd., Suwon-si, Gyeonggi-do 442-743 (KR)
(72) Inventor: Jeon, Ki Suk, No. 703-1101, Areummaeul-hyoseong Apt., Gyeonggi-do (KR); Shon, Jong Chull, 4F, Suyu Bldg., 757-3, Gyeonggi-do (KR); Kim, Hyang Ki, No. 108-902, Suwon-si, Gyeonggi-do (KR); Kim, Jun Beom, Yeoksam-dong Gangnam-gu, Seoul (KR)
(74) Representative: Grünecker, Kinkeldey, Stockmair & Schwanhäusser Anwaltssozietät

(56) References cited:
- EP-A- 1 724 530
- EP-A- 1 731 840
- WO-A-20/06013771
- US-A- 4 991 545
- US-A- 5 365 039

## Description

### BACKGROUND

### 1. Field

The present invention relates generally to a steam generator, a heating cooker having the same and a control method of the heating cooker, and more particularly to a steam generator capable of stably supplying water required for generating steam, preventing degradation of steam generation performance, and generating steam within a short period of time, a heating cooker having the steam generator, and a control method of the heating cooker.

### 2. Description of the Related Art

In general, a microwave oven using high-frequency waves, gas and electric ovens each using a burner or heater, and the like, are used as heating cookers for cooking foods.

Among these heating cookers, the gas or electric oven has disadvantages in that the food is oxidized by coming into contact with oxygen contained in the air because the gas or electric oven cooks food by directly applying heat onto the food. Therefore, the taste of the food is degraded, and the food is not healthy. When a steamer is used, too much moisture is contained in food. Therefore, the specific taste of the food is degraded, and cooking time is extended.

Further, in the case of the microwave oven that cooks the food by irradiating high-frequency waves onto the food, if the high-frequency waves are unevenly irradiated onto the food, the food is partially burned or underdone. That is, not only uniform cooking is difficult in the microwave oven, but also the food is dried, so that the taste of the food is degraded.

To solve these disadvantages of such conventional heating cookers, heating cookers (hereinafter, referred to as "steam ovens") for supplying heat to food through steam have been recently developed. If such steam ovens are used, appropriate moisture is maintained in food, so that the taste of the food can be maintained. Further, a cooking chamber fully filled with steam operates as an effective heat transfer medium, so that the cooking time can be reduced.

Such a steam oven generally includes a steam generator for generating and supplying steam by heating water, and a water supply for supplying water to the steam generator. The steam generator includes a steam container in which the steam is generated, and a steam heater for heating water supplied into the steam container. The water supply includes a water container and a water supply pump for transferring water stored in the water container to the steam container.

The water supply pump supplies a certain amount of water into the steam container, and then stops. The steam heater receives power and heats the water supplied into the steam container, thereby generating steam. The steam produced in such a manner is supplied into a cooking chamber. As the steam is supplied, the water in the steam container is reduced.
If the water in the steam container is reduced, water must be supplied from a water container by determining the time point when the water is reduced. Further, when no water exists, power of the steam heater must be shut off so as to protect the steam heater. For this reason, if the water level in the steam container is lowered to a certain level or less, water must be supplied into the steam container.

To this end, a water level sensor capable of sensing a water level is installed in the interior of the steam container such that the water supply can be automatically adjusted by allowing the water supply pump to be operated in accordance with a sensing signal of the water level sensor. Thus, for the purpose of the stable operation of the steam oven and the prevention of an accident, it is important to appropriately maintain a water level within the steam container while steam is generated.

As such, since a stable sensing operation of precisely sensing a change of a water level using a water level sensor is required for precisely maintaining a water level in a steam container, various types of water level sensors are conventionally employed. However, since there is a limitation in supplying water into a steam container or controlling an amount of water supplied through only the employment of a water level sensor, it is difficult to continuously use the water level sensor in practice.

WO 2006/013771 A1 discloses a heating cooker comprising a cooking chamber into which food can be put. A steam container generates steam to supply same to the cooking chamber. Water supply is used for supplying water into the steaming container and water level sensor is installed in the steam container. A controller controls the water supply in accordance with a sensor output value of the water level sensor, wherein the controller controls the water supply operation of the water supply by determining whether the steam container is subject to lack of water in accordance with the sensor output of the water level sensor.

### Summary of the Invention

It is an object of the present invention to provide a control method for a steam generator, a control method of a heating cooker and a heating cooker according to which the supply time and supply amount of water required for generating steam are controlled so that water can be stably supplied into a steam container, steam can be sufficiently generated due to the supply of supplementary water, and steam can be generated within a short period of time. Furthermore, a time point of supplying water is supplied to a user before the power is shut off to protect a steam heater, so that the steam heater can be continuously used in practice.

This object is solved by the features of the independent claims.

Further, the second time for additionally supplying water is designed to be of a shorter duration than a predetermined period of time allowing water to reach a maximum water level in the steam container, so that the steam can be generated quickly by heating a smaller amount of water that does not reach the maximum water level.

Also, the second time is variable depending on the output of the steam heater.

Further, the control method of the present invention may further include generating steam by controlling the steam heater to be operated when the predetermined minimum water level or a higher level in the steam container is sensed by the water level sensor.
In addition, the control method of the present invention may further include displaying a message of water supplemented to a user when the predetermined minimum water level in the steam container is not sensed by the water level sensor after supplying water for the first time.

Further, the operation of displaying the message of water supplemented may further include displaying a message of no water present when the predetermined minimum water level in the steam container is not sensed by the water level sensor while the message of water supplemented is displayed for a predetermined third time.

Further, the operation of displaying the message of no water present may further include an operation of controlling the water supply to be stopped when the operation is an initial operation, and controlling the water supply and stopping the operation of the steam heater when the operation is not an initial operation.

Further, the controller controls water to be supplied within a predetermined first time when the water level sensor detects the lack of water in the steam container, and controls an amount of water supplied by additionally supplying water for a predetermined second time when a predetermined minimum water level is sensed in the steam container by the water level sensor after supplying water.

Also, the controller designs the second time for additionally supplying water to be of a shorter duration than a predetermined period of time that allows water to reach a maximum water level in the steam container, so that the steam can be generated quickly by heating a smaller amount of water that does not reach the maximum water level.

Further, the controller varies the second time depending on the output of the steam heater.

In addition, the controller controls the steam heater to be operated so that steam is generated when the predetermined minimum water level or a higher level in the steam container is sensed by the water level sensor.

Further, the controller controls a message of water supplemented such that the message is displayed to a user when the predetermined minimum water level in the steam container is not sensed by the water level sensor after supplying water for the first time.

Further, the controller causes a message of no water to be displayed when the predetermined minimum water level in the steam container is not sensed by the water level sensor while the message of water supplemented is displayed for a predetermined third time.

Further, the controller stops the supply of water when a time point when the message of no water is displayed is an initial operation, and controls the water supply and causes the operation of the steam heater to be stopped when the time point is not an initial operation.

Additional aspects and/or advantages will be set forth in part in the description which follows and, in part, will be apparent from the description, or may be learned by practice of the invention.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a perspective view illustrating a heating cooker having a steam generator in accordance with an embodiment of the present invention;
FIG. 2 is an exploded perspective view illustrating a configuration of the steam generator having a water level sensor according to an embodiment of the present invention;
FIG. 3 is a view illustrating a structure in which the steam generator having the water level sensor is coupled to the heating cooker according to an embodiment of the present invention;
FIG. 4 is a control block diagram of the heating cooker having the steam generator in accordance with an embodiment of the present invention; and
FIG. 5 is a flowchart illustrating an operation of water level control in a heating cooker having the steam generator in accordance with an embodiment of the present invention.

### DETAILED DESCRIPTION OF THE EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

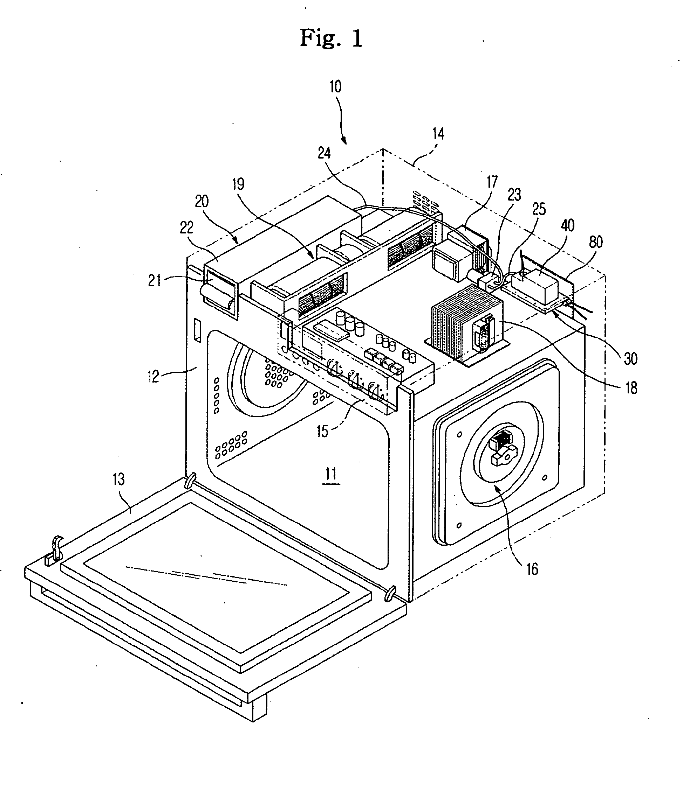

FIG. 1 is a perspective view illustrating a heating cooker having a steam generator in accordance with an embodiment of the present invention.

In FIG. 1, the heating cooker 10 having a steam generator in accordance with an embodiment of the present invention includes a body 12 provided with a cooking chamber 11, a cover 14 covering a top, both sides and a rear of the body 12, convention heaters 16 respectively mounted on both side surfaces of the body 12 to heat the cooking chamber 11, a magnetron 17 generating microwaves and oscillating the generated microwaves to the cooking chamber 11, and a steam generator 30 generating steam and supplying the generated steam to the cooking chamber 11.

A front of the body 12 is opened such that food can be put in/pulled out of the body 12, and the cooking chamber 11 is opened/closed by a door 13 attached at the front of the body 12. An electrical component chamber, in which various components constituting the heating cooker can be mounted, is formed between the top of the body 12 and the cover 14 covering it. A control unit 15 for a user operation is provided at an upper portion of the front of the body 12, and a water supply 20 for supplying water to the steam generator 30 is mounted next to the control unit 15.

The water supply 20 includes a water container 21 storing water therein and a water supply pump 23 supplying water to the steam generator 30. The water container 21 is installed to be attachable/detachable to a water container case 22 mounted on the top of the body 12, and the water supply pump 23 is connected to the water container 21 and the steam generator 30 through a water supply tub 24 and a water supply connection tube 25. An air blower 19 is mounted next to the water supply 20 on the top of the body 12. The air blower 19 sends air to cool down the various components mounted on the top of the body 12.

The convection heaters 16 respectively mounted on both of the side surfaces of the body 12 and the magnetron 17 mounted on a rear portion of the top of the body 12 are the same as general ones. The convection heaters 16 and the magnetron 17 supply heat or microwaves into the cooking chamber 11 so as to cook food put in the cooking chamber 11. The convection heater 16 includes a heater (not shown) and a circulating fan (not shown). Further, the convection heater 16 circulates air heated by the heater in the cooking chamber 11. The magnetron 17 receives a high voltage input from a high-voltage transformer 18 and generates microwaves so as to oscillate the generated microwaves to the cooking chamber 11 through a waveguide (not shown) coupled to the cooking chamber 11 at the rear thereof.

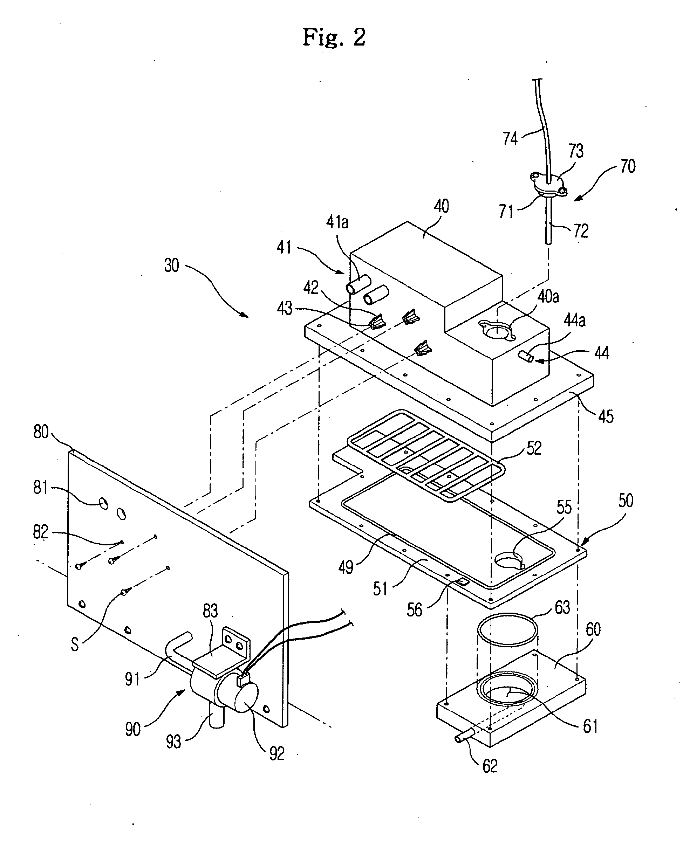

The steam generator 30 is coupled to a support bracket 80 provided at a rear portion of the top of the body 12. The steam generator 30 is connected to the water supply 20 and a water drainage 90 (FIG. 2) such that the movement of water is possible.

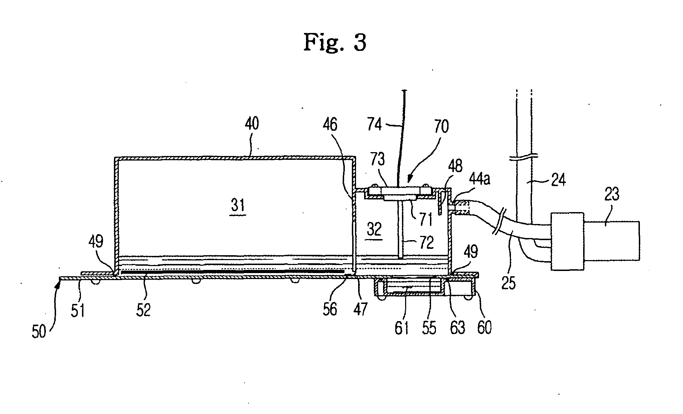

FIG. 2 is an exploded perspective view illustrating a configuration of the steam generator having a water level sensor according to an embodiment of the present invention, and FIG. 3 is a view illustrating a structure in which the steam generator having the water level sensor is coupled to the heating cooker according to an embodiment of the present invention.

In FIGS. 2 and 3, the steam generator 30 includes a steam container 40;, a steam heater 50 coupled to the steam container 40 beneath a bottom surface thereof, a water drainage guide member 60 coupled to the steam heater 50 at one side thereof;, and a water level sensor 70 coupled to the steam generator 30 at one side thereof.

A steam exhaust part 41 from which steam is generated from the interior of the steam container 40 and a plurality of fixing members 42, each having a screw hole 43, are located at one side of the steam container 40. A water supply part 44 to supply water to the interior of the steam container 40 is located at another side thereof. The steam exhaust part 41 includes steam exhaust ports 41 a protruding from the steam container 40. Further, each of the steam exhaust ports 41a is connected to a steam supply tube (not shown) to exhaust steam generated from a steam chamber 31 to the cooking chamber 11. The water supply part 44 includes a water supply port 44a protruding to the outside of the steam container 40. Further, the water supply part 44 is connected to the water supply pump 23 through the water supply connection tube 25. A heater cover part 45 surrounding the steam heater 50 extends downward around the bottom of the steam container, and a mounting hole 40a through which the water level sensor 70 is coupled to the steam container 40 is located at one portion of a top of the steam container 40.

The steam heater 50 includes a heating plate 51 adhered closely to the steam container 40, and a heating element 52 located at a top surface of the heating plate 51 and connected to a terminal part (not show) to which a power line (not shown) is connected to supply power. A sealing member 49 to prevent water of the steam chamber 31 and a water level sensing chamber 32 from being leaked to the outside is interposed between the heating plate 51 and the steam container 40. The heating element 52 is a resistor generating heat if the heating element 52 receives input power. The heating element 52 is immersed in water at a lower portion of the steam chamber 31. A water drainage hole 55 for draining water of the water level sensing chamber 32 therethrough is located at one side of the heating plate 51 positioned at a bottom surface of the water level sensing chamber 32. A temperature sensor 56 sensing the operational temperature of the steam heater 50 is located at one side of the heating plate 51 to protect the operation of the steam heater 50 due to overheating thereof.

The water drainage guide member 60 is coupled to a bottom surface of the steam heater 50 positioned at the bottom surface of the water level sensing chamber 32. A water drainage chamber 61 is provided in the water drainage guide member 60. The water drainage chamber 61 is connected to the water level sensing chamber 32 through the water drainage hole 55 located at the one side of the heating plate 51 positioned at the bottom surface of the water level sensing chamber 32. Further, the water drainage chamber 61 is connected to a water drainage port 62 connected to the outside, and the water drainage port 62 is connected to the water drainage 90 coupled to the support bracket 80.

The water drainage 90 includes a water drainage connection tube 91 connected to the water drainage port 62, a water drainage valve 92 controlling a water drainage operation, and a water drainage tube 93 connected to the water drainage valve 92 to drain water moved through the water drainage connection tube 91. The water drainage valve 92 is fixed to a valve support member 83 coupled to the support bracket 80. Water in the water level sensing chamber 32 is drained to the water drainage 90 through the water drainage hole 55, the water drainage chamber 61 and the water drainage port 62. A sealing member 63 to prevent a water leakage is interposed around the water drainage chamber 61 between the water drainage guide member 60 and the heating plate 51. The steam container 40, the steam heater 50 and the water drainage guide member 60 are screw-coupled to one another.

The steam generator 30 configured as described above is screw-coupled to the support bracket 80 provided at the top of the body 12 such that the water drainage hole 55 is inclined to be a a position that is lower than the terminal part 53. A plurality of fixing holes 82 respectively corresponding to the plurality of fixing members 42 are located on the support bracket 80. The steam generator 30 is fixed to the support bracket 80 by allowing a plurality of fixing screws S to be respectively inserted into the screw holes 43 of the fixing members 42 through the fixing holes 82. At this time, the steam exhaust ports 41 are respectively inserted into through-holes 81 provided on the support bracket 80, and the water drainage port 62 is inserted into the water drainage connection tube 91.

In FIG. 3, a partition wall 46 is located in the interior of the steam container 40. The partition wall 46 partitions the interior of the steam container 40 into the steam chamber 31, into which steam is generated, and the water level sensing chamber 32, in which the water level sensor 70 is installed and the water supply port 44a is connected to the water supply connection tube 25. A flow path 47 through which water can be moved is provided between the steam chamber 31 and water level sensing chamber 32 partitioned by the partition wall 46. Water supplied into the water level sensing chamber 32 through the water supply port 44a moves into the steam chamber 31 through the flow path 47. A shielding rib 48 is provided in front of the water supply port 44a in the interior of the water level sensing chamber 32. The shielding rib 48 prevents water supplied through the water supply port 44a from being rapidly sprayed toward the water level sensor 70 installed in the interior of the water level sensing chamber 32.

The water level sensor 70 is an electrostatic-capacity-type water level sensor that transmits signals by reacting to water possessing a predetermined electrostatic capacity. Further, the water level sensor 70 is a switching element that senses a change of a water level through contact with water in the interior of the steam container 40.

The water level sensor 70 includes a body 71, an electrode rod 72 attached to the body 71 to detect electrostatic capacitance in accordance with a change of a water level, and a sensor supporting part 73 connected to the body 71 and having a plurality of fixing screws for fixing the water level sensor 70 to the steam container 40 inserted into the sensor supporting part 73. The electrode rod 72 has an induction electrode that directly or indirectly detects contact with water to transmit a change in electrostatic capacity to the following controller through a cable 74. At this time, the electrode rod 72 does not sense a quantitative change of water in accordance with a minute change in electrostatic capacity by outputting a high-level signal when water exists and outputting a low-level signal when no water exists. Instead, the electrode rod 72 senses the reach of water up to a predetermined minimum water level (a water level at a time point when water must be again supplied because a water level in a steam container is determined to be less than a predetermined minimum water level).

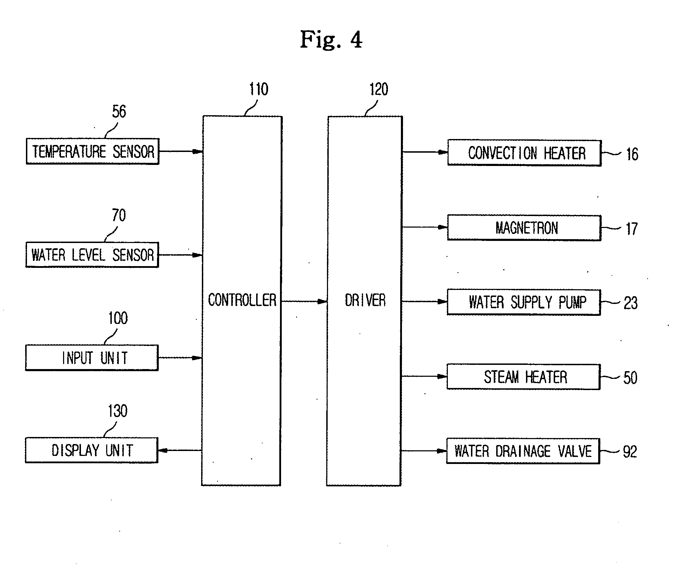

FIG. 4 is a control block diagram of the heating cooker having the steam generator according to an embodiment of the present invention. The heating cooker having the steam generator according to an embodiment of the present invention includes a temperature sensor 56, a water level sensor 70, an input unit 100, a controller 110, a driver 120 and a display unit 130.

The input unit 100 has the control unit 15 provided with a plurality of keys such that a user inputs desired information (cooking time, cooking menu, cooking start/stop and the like) to the controller 110.

The controller 110 is a microcomputer controlling respective devices of the heating cooker in accordance with cooking information input from the input unit 100. The controller 110 determines the presence of water in the steam container 40 in accordance with a predetermined high or predetermined low sensor output signal transmitted through the water level sensor 70.

At this time, the controller 110 determines time for supplying water by identifying a signal output value of the water level sensor 70 together with an operational signal. If the water level sensor 70 detects a lack of water, the controller 110 controls an amount of a water supply to be supplied through the operation of the water supply pump 23. If the water is supplied and water is sensed by the water level sensor 70 within a predetermined first time (a maximum time required for supplying water: about 25 seconds), the controller 110 controls an amount of water supplied by supplying more water for a second time (a time for controlling a supply amount of water: about 7 seconds) from a time point when the water is sensed by the water level sensor 70. In a conventional water supply algorithm, water is supplied up to a maximum water level by directly sensing the maximum water level. However, the present invention does not use a method of supplying an amount of water up to a predetermined maximum water level of the steam generator 30, but uses a method of counting the operational time of the water supply pump 23 if a predetermined minimum level is sensed. Accordingly, water is supplied until only the second time, so that steam can be optimally generated within a short period of time. The second time is determined depending on electric power consumed by the steam heater 50. As the output of the steam heater 50 becomes larger, the supply time of water is greater. If excess water is supplied, a heating time until the generation of steam is increased or steam is weakly generated although the output of the steam heater is sufficiently utilized. On the contrary, if an insufficient amount of water is supplied, a water supply operation must be frequently repeated. Therefore, it is important to determine a suitable amount of water to be supplied for proper power consumption.

Further, when water is not sensed by the water level sensor 70 for the first time, the controller 110 outputs a signal informing of a water supplement for a predetermined third time (a time appropriated in performing a water supplement operation: about 1 minute and 20 seconds). Thus, a user identifies a message "Water Supplement," and then supplies water into the water container 21. When water is sensed by the water level sensor 70 within the third time because the user does not supplement the water supply within a certain time, the controller 110 sends an error message "No Water" to finally warn the user of the need for additional water before power is shut off to protect the steam heater 50.

Furthermore, when the operational temperature of the steam heater 50, which is sensed in the temperature sensor 56, exceeds a predetermined overheating temperature (about 150°C), the controller 110 informs the user of an error message that informs of the cut-off of power due to the overheating of the steam heater 50.

The driver 120 drives the magnetron 17, a cooling fan (not shown), the steam heater 50, the water supply pump 23, the circulating fan (not shown), the convention heaters 16 and the like in accordance with driving control signals of the controller 110.

The display unit 130 displays cooking time, cooking menu, the operational state of the heating cooker and the like in accordance with display control signals of the controller 110. The display unit 130 displays a warning message such as "Water Supplement", "No Water" or the like before the power of the steam heater is shut off, or an error message is displayed due to the overheating of the steam heater 50.

Hereinafter, a steam generator configured as described above and the process and advantages of a control method of the steam generator will be described.

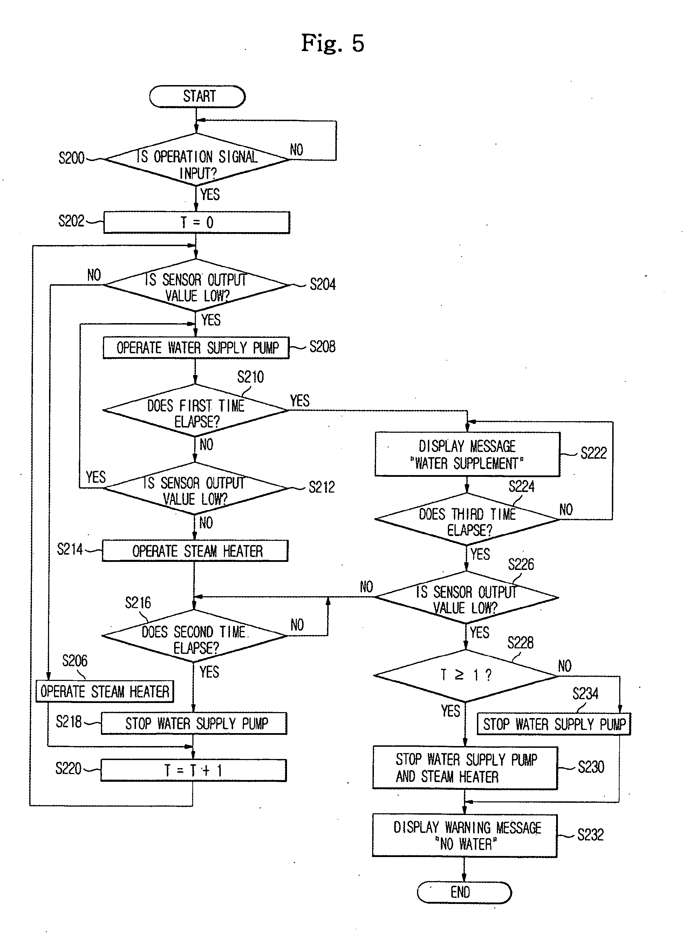

FIG. 5 is a flowchart illustrating an operation of water level control in a heating cooker having the steam generator in accordance with an embodiment of the present invention.

If a user selects desired cooking information (food cooking using steam) by putting food in the cooking chamber 11 and operating the input unit 100, the cooking information selected by the user is input to the controller 110 through the input unit 100.

Accordingly, the controller 110 controls food cooking to be started in accordance with the input cooking information. The controller 110 determines whether an operation signal is input (S200).

If the operation signal is input, the controller 110 identifies the water level sensor 70 every predetermined time periods to initiate the function value T of a time counter as "0" for the purpose of determining whether or not the water level reaches a predetermined low level (S202). Then, a water level in the interior of the steam container 40 is sensed by the water level sensor 70, thereby outputting a high- or low-level signal.

In the method of sensing a change of a water level using the water level sensor 70, since the electrode rod 72 of the water level sensor 70 has an induction electrode, contact with water is directly or indirectly detected. Thus, a high-level signal is output when water is present, and a low-level signal is output when no water is present. A sensor output value that does not sense a quantitative change of water, but senses the reach of water up to a predetermined minimum water level is transmitted to the controller 110 through the cable 74.

Accordingly, the controller 110 determines whether the transmitted sensor output value indicates a predetermined low level of water (S204). When the sensor output value does not indicate a predetermined low level of water, the controller 110 determines that water exists at the minimum water level or more in the steam container 40, and controls the water supply pump to be operated such that water is supplied into the steam container 40 (S206).

Meanwhile, when the sensor output value indicates a predetermined minimum level of water or a level of water less than the predetermined minimum level of water, i.e., where water in the steam container 40 remains below the first water level, the controller 110 determines that the water level in the steam container is less than a predetermined low level. Then, the controller 110 controls the water supply pump 23 to be operated such that water is supplied into the steam container 40 (S208).

At this time, the controller 110 determines whether a predetermined first time (about 25 seconds) has elapsed by controlling the water supply pump to be operated and simultaneously counting time for the purpose of checking time when the water is supplied (S210). When the first time has not elapsed, the controller 110 determines once more whether the sensor output value is less than the predetermined minimum level for the purpose of checking whether a water level has changed in the steam container 40 within the first time (S212).

When the sensor output value is less than a predetermined minimum level as the result of the operation S212, the shortage of water is sensed. Therefore, the controller 110 returns to operation S208 and checks whether the sensor output value has changed while continuously controlling the water supply pump 23 to be operated until the time for supplying water exceeds the first time.

Meanwhile, when the sensor output value is not less than the predetermined minimum level as the result of operation S212, water is sensed. Therefore, the controller 110 causes the steam heater 50 to be operated such that steam is generated (S214). Further, the controller 110 simultaneously controls a supply amount of water by supplying more water for a predetermined second time (about 7 seconds) from a time point when the water is sensed.

At this time, the second time is determined depending on the electric power consumed by the steam heater 50. As the output of the steam heater 50 becomes larger, the time to supply water is further extended. If excess water is supplied, a heating time until the generation of steam is extended or steam is weakly generated although the output of the steam heater is sufficiently utilized. On the contrary, if water is insufficiently supplied, a water must be frequently supplied. Therefore, it is important to determine an amount of water that is suitable to supply for proper power consumption.

Accordingly, the controller 110 determines whether the counted time exceeds the second time (S216). When the counted time exceeds the second time, the controller 110 causes the water supply pump to be stopped such that the water supply is suspended (S218). Then, the controller 110 causes the water level sensor 70 every predetermined time period to check that the water is supplied by increasing the function value T of the time counter by 1 for the purpose of determining whether the water level is less than a predetermined minimum level (S220).

Meanwhile, when steam is immediately generated through the operation of the steam heater 50 at operation S206, the controller 110 also checks that water is supplied by increasing the function value T of the time counter by 1. Then, the controller 110 returns to operation S204 and continuously identifies a change of a water level due to the generation of steam.

Further, when a time for performing water supply through the operation of the water supply pump 23 exceeds the first time (about 25 seconds) at operation S210, the controller 110 outputs a signal to inform a user of a need for more water (a water supplement) for a predetermined third time (about 1 minute and 20 seconds) to the display unit 130.

Accordingly, the user identifies a message "Water Supplement" displayed on the display unit 130 (S222) and then supplies water into the water container 21. The controller 110 determines whether a third time when the user supplies the water supplement within a certain time has elapsed (S224). Further, the controller 110 displays a message "Water Supplement" until the third time elapses to inform the user of the water supplement before the power is shut off to protect the steam heater 50.

Here, the steam heater 50 is continuously in an operation state until both the first and third times elapse. Thus, the steam heater 50 does not become overheated because the steam generator 30 is designed such that an amount of water remaining between an end of the water level sensor 70 and the steam heater 50 is sufficient although the steam heater 50 is operated for the first and third times. In the present invention, a case wherein a sheet-shaped heater is used has been described. However, when a sheath is installed in the interior of the steam generator 30, the steam generator 30 may be arranged such that an amount of water remaining between the water level sensor 70 and the sheath heater is sufficient since the sheath heater does not become exposed to the water outside the steam generator although the sheath heater is operated for the first and third times. Through such a configuration, the steam heater 50 can be prevented from being overheated even though the steam heater 50 is operated while the message "Water Supplement" is displayed.

When the third time elapses as the result of operation S224, the controller 110 determines whether the sensor output value is lower than a predetermined value (S226). When the sensor output value is not lower than a predetermined value, water is sensed by the water level sensor 70 because the user performs the water supplement within the third time. Therefore, the controller 110 proceeds to operation S216 to perform more water supply for the second time.

When the sensor output value is lower than a predetermined value as the result of operation S224, water is not sensed by the water level sensor 70 within the third time because the user does not perform the water supplement within a certain time. Therefore, the controller 110 determines whether the function value T of the time counter is "1" or more (S228). When the function value T of the time counter is "1" or more, the controller 110 causes the water supply pump 23 and the steam heater 50 to be stopped (S230). Then, the controller 110 finally warns the user of no water while displaying an error message "No Water" through the display unit 130 (S232).

Meanwhile, when the function value T of the time counter is not "1" or more as the result of operation S228, the controller 110 causes the water supply pump 23 to be stopped (S234). Then, the controller 110 proceeds to operation S232 to finally warn the user of no water while displaying an error message "No Water" through the display unit 130.

Further, the controller 110 senses the operational temperature of the steam heater 50 through the temperature sensor 56 in the operation of the steam heater 50. When the sensed operational temperature of the steam heater 50 exceeds the predetermined overheating temperature (about 150°C), the controller 150 informs the user of an error message advising of the cut-off of power due to the overheating of the steam heater 50 through the display unit 130. Such an algorithm is an interrupt control capable of securing the safety of a system by rapidly sending an error message when the steam heater 50 is overheated due to no water in the operation of the steam heater 50, and where the temperature sensor 56 installed in the steam heater 50 is overheated due to no water.

As described above, in a steam generator, a heating cooker having the same and a control method of the heating cooker according to an embodiment of the present invention, there is an advantage in that the supply time and supply amount of water required for generating steam is controlled so that water in a steam container can be stably supplied.

Further, there is an advantage in that an operation of informing a user of a time point of a water supplement so as to warn about the need for the water supplement before the power for protecting the operation of a steam heater is shut off, so that the steam heater can be continuously used in practice.

## Claims

1. A control method for a steam generator (30) having a steam container (40), a steam heater (50) and a water level sensor (70), the control method comprising:
determining (S204) whether the steam container (40) is subject to a lack of water using the water level sensor (70), and
supplying (S208, S210) water for a predetermined first time when the steam container (40) is subject to the lack of water; **characterized by**
controlling (S216, S226) an amount of water supplied by additionally supplying water for a predetermined second time when a predetermined minimum water level is sensed in the steam container (40) by the water level sensor (70) after supplying water.

2. The control method as claimed in claim 1, wherein the second time for additionally supplying water is less than a predetermined period of time during which water reaches a predetermined maximum water level in the steam container (40), so that steam is generated quickly by heating less water than an amount of water at the predetermined maximum water level.

3. The control method as claimed in claim 1, wherein the second time is variable depending on an output of the steam heater (50).

4. The control method as claimed in claim 1, further comprising generating (S214) steam by operating the steam heater (50) when the water level sensor (70) detects the predetermined minimum water level or a water level that is greater than the predetermined minimum water level in the steam container (40).

5. The control method as claimed in claim 1, further comprising displaying (S222) a message of water supplement to a user when the predetermined minimum water level in the steam container (50) is not sensed by the water level sensor (70) after supplying (S208) water for the first time.

6. The control method as claimed in claim 5, wherein the displaying the message of water supplement further comprises displaying (S232) a message of no water when the predetermined minimum water level in the steam container (50) is not sensed (S226) by the water level sensor (70) while the message of water supplement is displayed (S224) for a predetermined third time.

7. The control method as claimed in claim 6, wherein the displaying (S232) the message of no water further comprises an operation of stopping (S234) the supply of the water when (S228) the operation is an initial operation, and controlling (S230) the water supply and the stopping of the operation of the steam heater (50) when (S228) the operation is not an initial operation.

8. A control method of a heating cooker (10) having a cooking chamber (11), a steam container (40), a steam heater (50), a water level sensor (70) and a controller (110), the control method comprising:
determining (S204) whether the steam container (40) is subject to a lack of water using the water level sensor (70); and
supplying (S208, S210) water for a predetermined first time utilizing the controller when the steam container (40) is subject to the lack of water; **characterized by**
controlling (S212, S214, S216) a supply amount of water by additionally supplying water for a predetermined second time when a predetermined minimum water level is sensed in the steam container (40) by the water level sensor (70) after supplying water.

9. The control method as claimed in claim 8, wherein the second time for additionally supplying water is less than a predetermined period of time during which water is able to reach a predetermined maximum water level in the steam container (40), so that steam is generated quickly by heating less water than an amount of water at the predetermined maximum water level.

10. The control method as claimed in claim 8, wherein the second time is variable depending on an output of the steam heater (50).

11. The control method as claimed in claim 8, further comprising generating (S214) steam utilizing the controller by operating the steam heater (50) when the predetermined minimum water level or a water level that is greater than the predetermined minimum water level is sensed in the steam container (40) by the water level sensor (70).

12. The control method as claimed in claim 8, further comprising displaying (S222) a message of water supplement to a user utilizing the controller (110) when the predetermined minimum water level in the steam container (40) is not sensed by the water level sensor (70) after supplying water for the first time.

13. The control method as claimed in claim 12, wherein the displaying the message of water supplement further comprises displaying (S232) a message of no water utilizing the controller (110) when the minimum water level in the steam container (40) is not sensed by the water level sensor (70) while (S224, S226) the message of water supplement is displayed for a predetermined third time.

14. The control method as claimed in claim 13, wherein the displaying the message of no water further comprises stopping (S234) the water supply when (S228) the operation is an initial operation, and controlling (S230) the water supply and the stopping operation of the steam heater (50) utilizing the controller (110) when (S228) the operation is not an initial operation.

15. A heating cooker (10) comprising:
a cooking chamber (11) into which food is put;
a steam container (40) generating steam to supply steam to the cooking chamber (11);
a water supply (20) supplying water into the steam container (40);
a steam heater (50) heating water in the steam container (40);
a water level sensor (70) installed in the steam container (40) to sense a change of a water level in the steam container (40); and
a controller (110) controlling the water supply in accordance with a sensor output value of the water level sensor (70),
wherein the controller (110) controls the water supply operation of the water supply (20) by determining whether the steam container (40) is subject to lack of water in accordance with the sensor output value of the water level sensor (70), **characterized in that**
the controller (110) controls water to be supplied within a predetermined first time when the water level sensor (70) detects the lack of water in the steam container (40), and controls a supply amount of water by additionally supplying water for a predetermined second time when a predetermined minimum water level in the steam container (40) is sensed by the water level sensor (70) after supplying water.

16. The heating cooker as claimed in claim 15, wherein the controller (110) designs the second time for additionally supplying water to be less than a predetermined period of time during which water reaches a predetermined maximum water level in the steam container (40), so that the steam is generated quickly by heating less water than an amount of water that reaches the predetermined maximum water level.

17. The heating cooker as claimed in claim 15, wherein the controller (110) controls the second time to be variable depending on an output of the steam heater (50).

18. The heating cooker as claimed in claim 15, wherein the controller (110) controls the steam heater (50) to be operated such that steam is generated when the predetermined minimum water level or a water level that is greater than the predetermined minimum water level in the steam container (40) is sensed by the water level sensor (70).

19. The heating cooker as claimed in claim 15, wherein the controller (110) controls a message of water supplement to be displayed to a user when the predetermined minimum water level in the steam container (40) is not sensed by the water level sensor (70) after supplying water for the first time.

20. The heating cooker as claimed in claim 19, wherein the controller (110) controls a message of no water to be displayed when the predetermined minimum water level in the steam container (40) is not sensed by the water level sensor (70) while the message of water supplement is displayed for a predetermined third time.

21. The heating cooker as claimed in claim 20, wherein the controller (110) stops the supply of water when a time point when the message of no water is displayed is an initial operation, and controls the water supply and stopping the operation of the steam heater (50) when the time point is not an initial operation.

## Patentansprüche

1. Steuerverfahren für einen Dampferzeuger (30), der einen Dampfbehälter (40), einen Dampferhitzer (50) und einen Wasserpegelsensor (70) aufweist, wobei das Verfahren zum Steuern umfasst:
unter Verwendung des Wasserpegelsensors (70) Feststellen (S204), ob in dem Dampfbehälter (40) ein Wassermangel vorliegt, und
Zuführen (S208, S210) von Wasser über eine vorgegebene erste Zeit, wenn in dem Dampfbehälter (40) der Wassermangel vorliegt; **gekennzeichnet durch**
Steuern (S216, S226) einer zugeführten Wassermenge **durch** zusätzliches Zuführen von Wasser über eine vorgegebene zweite Zeit, wenn nach Zuführen von Wasser ein vorgegebener minimaler Wasserpegel in dem Dampfbehälter (40) **durch** den Wasserpegelsensor (70) gemessen wird.

2. Steuerverfahren nach Anspruch 1, wobei die zweite Zeit zum zusätzlichen Zuführen von Wasser kürzer ist als ein vorgegebener Zeitraum, während dem Wasser einen vorgegebenen maximalen Wasserpegel in dem Dampfbehälter (40) erreicht, so dass Dampf schnell erzeugt wird, indem weniger Wasser als eine Menge Wasser auf dem vorgegebenen maximalen Wasserpegel erhitzt wird.

3. Steuerverfahren nach Anspruch 1, wobei die zweite Zeit in Abhängigkeit von einem Ausstoß des Dampferhitzers (50) verändert werden kann.

4. Steuerverfahren nach Anspruch 1, das des Weiteren Erzeugen (S214) von Dampf durch Betätigen des Dampferhitzers (50) umfasst, wenn der Wasserpegelsensor (70) den vorgegebenen minimalen Wasserpegel oder einen Wasserpegel erfasst, der höher ist als der vorgegebene minimale Wasserpegel in dem Dampfbehälter (40).

5. Steuerverfahren nach Anspruch 1, das des Weiteren Anzeigen (S222) einer Nachricht über das Nachfüllen von Wasser für einen Benutzer umfasst, wenn nach Zuführen (S208) von Wasser über die erste Zeit der vorgegebene minimale Wasserpegel in dem Dampfbehälter (50) von dem Wasserpegelsensor (70) nicht gemessen wird.

6. Steuerverfahren nach Anspruch 5, wobei das Anzeigen der Nachricht über das Nachfüllen von Wasser des Weiteren Anzeigen (232) einer Nachricht über das Nichtvorhandensein von Wasser umfasst, wenn der vorgegebene minimale Wasserpegel in dem Dampfbehälter (50) von dem Wasserpegelsensor (70) nicht gemessen wird (S226), während die Nachricht über das Nachfüllen von Wasser über eine dritte vorgegebene Zeit angezeigt wird (S224).

7. Steuerverfahren nach Anspruch 6, wobei das Anzeigen (S232) der Nachricht über das Nichtvorhandensein von Wasser des Weiteren einen Vorgang des Unterbrechens (S234) der Zufuhr von Wasser, wenn (S228) sich der Betrieb in einem Anfangsstadium befindet, und des Steuerns (S230) der Wasserzufuhr sowie des Unterbrechens des Betriebes des Dampferhitzers (50) umfasst, wenn (S228) sich der Betrieb nicht in einem Anfangsstadium befindet.

8. Steuerverfahren einer Heiz-Kochvorrichtung (10), die eine Kochkammer (11), einen Dampfbehälter (40), einen Dampferhitzer (50), einen Wasserpegelsensor (70) und eine Steuereinrichtung (110) aufweist, wobei das Steuerverfahren umfasst:
unter Verwendung des Wasserpegelsensors (70) Feststellen (S204), ob in dem Dampfbehälter (40) ein Wassermangel vorliegt; und
Zuführen (S208, S210) von Wasser über eine vorgegebene erste Zeit unter Nutzung der Steuereinrichtung, wenn in dem Dampfbehälter (40) der Wassermangel vorliegt; **gekennzeichnet durch**
Steuern (S212, S214, S216) einer Wasser-Zuführmenge **durch** zusätzliches Zuführen von Wasser über eine vorgegebene zweite Zeit, wenn nach dem Zuführen von Wasser ein vorgegebener minimaler Wasserpegel in dem Dampfbehälter (40) **durch** den Wasserpegelsensor (70) gemessen wird.

9. Steuerverfahren nach Anspruch 8, wobei die zweite Zeit zum zusätzlichen Zuführen von Wasser kürzer ist als ein vorgegebener erster Zeitraum, während dem Wasser einen vorgegebenen maximalen Wasserpegel in dem Dampfbehälter (40) erreichen kann, so dass Dampf schnell erzeugt wird, indem weniger Wasser als eine Menge auf dem vorgegebenen maximalen Wasserpegel erhitzt wird.

10. Steuerverfahren nach Anspruch 8, wobei die zweite Zeit in Abhängigkeit von einem Ausstoß des Dampferhitzers (50) verändert werden kann.

11. Steuerverfahren nach Anspruch 8, das des Weiteren Erzeugen (S214) von Dampf unter Nutzung der Steuereinrichtung durch Betätigen des Dampferhitzers (50) umfasst, wenn der vorgegebene minimale Wasserpegel oder ein Wasserpegel, der höher ist als der vorgegebene minimale Wasserpegel, durch den Wasserpegelsensor (70) in dem Dampfbehälter (40) gemessen wird.

12. Steuerverfahren nach Anspruch 8, das des Weiteren Anzeigen (S222) einer Nachricht über das Nachfüllen von Wasser für einen Benutzer unter Nutzung der Steuereinrichtung (110) umfasst, wenn nach dem Zuführen von Wasser der vorgegebene minimale Wasserpegel in dem Dampfbehälter (40) über die erste Zeit durch den Wasserpegelsensor (70) nicht erfasst wird.

13. Steuerverfahren nach Anspruch 12, wobei das Anzeigen der Nachricht über das Nachfüllen von Wasser des Weiteren Anzeigen (S232) einer Nachricht über das Nichtvorhandensein von Wasser unter Nutzung der Steuereinrichtung (110) umfasst, wenn der minimale Wasserpegel in dem Dampfbehälter (40) von dem Wasserpegelsensor (70) nicht gemessen wird, während (S224, S226) die Nachricht über das Nachfüllen von Wasser über eine vorgegebene dritte Zeit angezeigt wird.

14. Steuerverfahren nach Anspruch 13, wobei das Anzeigen der Nachricht über das Nichtvorhandensein von Wasser des Weiteren Unterbrechen (S234) der Wasserzufuhr, wenn (S228) sich der Betrieb in einem Anfangsstadium befindet, und Steuern (S230) der Wasserzufuhr sowie Unterbrechen des Betriebes des Dampferhitzers (50) unter Nutzung der Steuereinrichtung (110) umfasst, wenn (S228) sich der Betrieb nicht in einem Anfangsstadium befindet.

15. Heiz-Kochvorrichtung (10), die umfasst:
eine Kochkammer (11), in die Lebensmittel gegeben werden;
einen Dampfbehälter (40), der Dampf erzeugt, um der Kochkammer (11) Dampf zuzuführen;
eine Wasserzuführeinrichtung (20) zum Zuführen von Wasser in den Dampfbehälter (40);
einen Dampferhitzer (50), der Wasser in dem Dampfbehälter (40) erhitzt;
einen Wasserpegelsensor (70), der in dem Dampfbehälter (40) installiert ist, um eine Änderung eines Wasserpegels in dem Dampfbehälter (40) zu messen; und
eine Steuereinrichtung (110), die die Wasserzufuhr entsprechend einem Sensor-Ausgangswert des Wasserpegelsensors (70) steuert,
wobei die Steuereinrichtung (110) den Wasserzuführbetrieb der Wasserzuführeinrichtung (20) steuert, indem sie entsprechend dem Sensor-Ausgangswert des Wasserpegelsensors (70) feststellt, ob in dem Dampfbehälter (40) Wassermangel vorliegt, **dadurch gekennzeichnet, dass**
die Steuereinrichtung (110) innerhalb einer vorgegebenen ersten Zeit zuzuführendes Wasser steuert, wenn der Wasserpegelsensor (70) den Wassermangel in dem Dampfbehälter (40) erfasst, und eine Wasserzuführmenge durch zusätzliches Zuführen von Wasser über eine vorgegebene zweite Zeit steuert, wenn nach dem Zuführen von Wasser ein vorgegebener minimaler Wasserpegel in dem Dampfbehälter (40) durch den Wasserpegelsensor (70) gemessen wird.

16. Heiz-Kochvorrichtung nach Anspruch 15, wobei die Steuereinrichtung (110) die zweite Zeit zum zusätzlichen Zuführen von Wasser so bestimmt, dass sie kürzer ist als ein vorgegebener Zeitraum, während dem Wasser einen vorgegebenen maximalen Wasserpegel in dem Dampfbehälter (40) erreicht, so dass der Dampf schnell erzeugt wird, indem weniger Wasser als eine Menge Wasser erhitzt wird, die den vorgegebenen maximalen Wasserpegel erreicht.

17. Heiz-Kochvorrichtung nach Anspruch 15, wobei die Steuereinrichtung (110) die zweite Zeit so steuert, dass sie in Abhängigkeit von einem Ausstoß des Dampferhitzers (50) geändert werden kann.

18. Heiz-Kochvorrichtung nach Anspruch 15, wobei die Steuereinrichtung (110) den Dampferhitzer (50) so steuert, dass er so betrieben wird, dass Dampf erzeugt wird, wenn der vorgegebene minimale Wasserpegel oder ein Wasserpegel, der höher ist als der vorgegebene minimale Wasserpegel, durch den Wasserpegelsensor (70) in dem Dampfbehälter (40) gemessen wird.

19. Heiz-Kochvorrichtung nach Anspruch 15, wobei die Steuereinrichtung (110) die Anzeige einer Nachricht über das Nachfüllen von Wasser für einen Benutzer steuert, wenn nach dem Zuführen von Wasser über die erste Zeit der vorgegebene minimale Wasserpegel in dem Dampfbehälter (40) von dem Wasserpegelsensor (70) nicht gemessen wird.

20. Heiz-Kochvorrichtung nach Anspruch 19, wobei die Steuereinrichtung (110) die Anzeige einer Nachricht über das Nichtvorhandensein von Wasser steuert, wenn der vorgegebene minimale Wasserpegel in dem Dampfbehälter (40) von dem Wasserpegelsensor (70) nicht gemessen wird, während die Nachricht über das Nachfüllen von Wasser über eine vorgegebene dritte Zeit angezeigt wird.

21. Heiz-Kochvorrichtung nach Anspruch 20, wobei die Steuereinrichtung (110) die Zufuhr von Wasser unterbricht, wenn ein Zeitpunkt, zu dem die Nachricht über das Nichtvorhandensein von Wasser angezeigt wird, ein Anfangsstadium des Betriebes ist, und die Wasserzufuhr sowie Unterbrechen des Betriebes des Dampferhitzers (50) steuert, wenn der Zeitpunkt kein Anfangsstadium ist.

## Revendications

1. Un procédé de contrôle pour un générateur de vapeur (30) équipé d'un conteneur de vapeur (40), d'un corps de chauffage à la vapeur (50) et d'un capteur de niveau d'eau (70), la méthode de commande comprenant :
la détermination (S204) si le conteneur de vapeur (40) est sujet à un manque d'eau en utilisant le capteur de niveau d'eau (70), et
l'approvisionnement (S208, S210) en eau pour une première durée prédéterminée lorsque le conteneur de vapeur (40) est soumis à un manque d'eau ; **caractérisée par**
le contrôle (S216, S226) d'une quantité d'eau fournie par approvisionnement supplémentaire en eau pour une deuxième durée prédéterminée lorsqu'un niveau d'eau minimum prédéterminé est détecté dans le conteneur de vapeur (40) par le capteur de niveau d'eau (70) après approvisionnement en eau.

2. Le procédé de contrôle revendiqué selon la revendication 1, où la deuxième durée pour l'approvisionnement supplémentaire en eau est inférieure à une période de temps prédéterminée durant laquelle l'eau atteint un niveau d'eau maximum prédéterminé dans le conteneur de vapeur (40), de sorte que la vapeur est générée rapidement en chauffant moins d'eau qu'une quantité d'eau au niveau d'eau maximum prédéterminé.

3. Le procédé de contrôle revendiqué selon la revendication 1, où la deuxième durée varie selon une sortie du corps de chauffage à la vapeur (50).

4. Le procédé de contrôle revendiqué selon la revendication 1, comprenant en plus la production (S214) de vapeur en activant le corps de chauffage à la vapeur (50) lorsque le capteur de niveau d'eau (70) détecte le niveau d'eau minimum prédéterminé
ou un niveau d'eau qui est plus élevé que le niveau d'eau minimum prédéterminé dans le conteneur de vapeur (40).

5. Le procédé de contrôle revendiqué selon la revendication 1, comprenant en outre l'affichage (S222) d'un message de supplément d'eau pour un utilisateur lorsque le niveau d'eau minimum prédéterminé dans le conteneur de vapeur (50) n'est pas détecté par le capteur de niveau d'eau (70) après l'approvisionnement (S208) en eau pour la première durée.

6. Le procédé de contrôle revendiqué selon la revendication 5, où l'affichage du message de supplément d'eau comprend en outre l'affichage (S232) d'un message d'absence d'eau lorsque le niveau d'eau minimum prédéterminé dans le conteneur de vapeur (50) n'est pas détecté (S226) par le capteur de niveau d'eau (70) alors que le message de supplément d'eau est affiché (S224) pour une troisième durée prédéterminée.

7. Le procédé de contrôle revendiqué selon la revendication 6, où l'affichage (S232) du message d'absence d'eau comprend en outre une opération d'arrêt (S234) de l'approvisionnement de l'eau lorsque (S228) l'utilisation est une utilisation initiale, et le contrôle (S230) de l'approvisionnement en eau et l'arrêt de l'utilisation du corps de chauffage à la vapeur (50) lorsque (S228) l'utilisation n'est pas une utilisation initiale.

8. Un procédé de contrôle d'un autocuiseur (10) disposant d'une cavité de cuisson (11), d'un conteneur de vapeur (40), d'un corps de chauffage à la vapeur (50), d'un capteur de niveau d'eau (70) et d'un contrôleur (110), le procédé de contrôle comprenant :
la détermination (S204) si le conteneur de vapeur (40) est soumis à un manque d'eau en utilisant le capteur de niveau d'eau (70) ; et
l'approvisionnement (S208, S210) en eau pour une première durée prédéterminée utilisant le contrôleur lorsque le conteneur de vapeur (40) est soumis à un manque d'eau,
**caractérisé par**
le contrôle (S212, S214, S216) d'une quantité d'approvisionnement en eau par approivisement supplémentaire en eau pour une deuxième durée prédéterminée lorsqu'un niveau d'eau minimum prédéterminé est détecté dans le conteneur de vapeur (40) par le capteur de niveau d'eau (70) après approivisement en eau.

9. Le procédé de contrôle revendiqué selon la revendication 8, où la deuxième durée pour l'approvisionnement supplémentaire en eau est inférieure à une durée prédéterminée durant laquelle l'eau est capable d'atteindre un niveau d'eau maximum prédéterminé dans le conteneur de vapeur (40), de sorte que la vapeur soit générée rapidement en chauffant une quantité d'eau inférieure à une quantité d'eau au niveau d'eau maximum prédéterminé.

10. Le procédé de contrôle revendiqué selon la revendication 8, où la deuxième durée varie selon une sortie du corps de chauffage à la vapeur (50).

11. Le procédé de contrôle revendiqué selon la revendication 8, comprenant en outre la production (S214) de vapeur utilisant le contrôleur en activant le corps de chauffage à la vapeur (50) lorsque le niveau d'eau minimum ou un niveau d'eau plus élevé que le niveau d'eau minimum prédéterminé est détecté dans le conteneur de vapeur (40) par le capteur de niveau d'eau (70).

12. Le procédé de contrôle revendiqué selon la revendication 8, comprenant en outre l'affichage (S222) d'un message de supplément d'eau pour un utilisateur utilisant le contrôleur (110) lorsque le niveau d'eau minimum prédéterminé dans le conteneur de vapeur (40) n'est pas détecté par le capteur de niveau d'eau (70) après un approvisionnement en eau pour la première durée.

13. Le procédé de contrôle revendiqué selon la revendication 12, où l'affichage du message sur le supplément d'eau comprend en outre l'affichage (S232) d'un message d'absence d'eau utilisant le contrôleur (110) lorsque le niveau minimum d'eau dans le conteneur de vapeur (40) n'est pas détecté par le capteur de niveau d'eau (70) alors que (S224, S226) le message de supplément d'eau est affiché pour une troisième durée prédéterminée.

14. Le procédé de contrôle revendiqué selon la revendication 13, où l'affichage du message d'absence d'eau comprend en outre l'arrêt (S234) de l'alimentation en eau lorsque (S228) l'utilisation est une utilisation initiale, et le contrôle (S230) de l'alimentation en eau et l'arrêt de l'utilisation du corps de chauffage à la vapeur (50) en utilisant le contrôleur (110) lorsque (S228) l'utilisation n'est pas une utilisation initiale.

15. Un autocuiseur (10) comprenant :
une cavité de cuisson (11) où les aliments sont placés ;
un conteneur de vapeur (40) produisant de la vapeur pour alimenter la cavité de cuisson en vapeur (11) ;
une alimentation en eau (20) approvisionnant le conteneur de vapeur en eau (40) ;
un corps de chauffage à la vapeur (50) chauffant de l'eau dans le conteneur de
vapeur (40) ;
un capteur de niveau d'eau (70) installé dans le conteneur de vapeur (40) pour détecter un changement de niveau d'eau dans le conteneur de vapeur (40) ; et
un contrôleur (110) contrôlant l'alimentation en eau conformément à une valeur de sortie de capteur du capteur de niveau d'eau (70),
où le contrôleur (110) contrôle l'opération d'alimentation en eau de l'alimentation en eau (20) en déterminant si le conteneur de vapeur (40) est soumis à un manque d'eau conformément à la valeur de sortie de capteur du capteur de niveau d'eau (70), **caractérisé par le fait que**
le contrôleur (110) contrôle l'eau à fournir durant une première durée prédéterminée lorsque le capteur de niveau d'eau (70) détecte le manque d'eau dans le conteneur de vapeur (40), et contrôle une quantité d'alimentation en eau en fournissant également de l'eau pour une deuxième durée prédéterminée lorsqu'un niveau d'eau minimum prédéterminé dans le conteneur de vapeur (40) est détecté par le capteur de niveau d'eau (70) après l'approvisionnement en eau.

16. L'autocuiseur revendiqué selon la revendication 15, où le contrôleur (110) conçoit la deuxième durée pour un approvisionnement supplémenraire en eau comme étant inférieure à un période de temps prédéterminée durant laquelle l'eau atteint un niveau d'eau maximum prédéterminé dans le conteneur de vapeur (40), de sorte que la vapeur est produite rapidement en chauffant moins d'eau qu'une quantité d'eau qui atteint le niveau d'eau maximum prédéterminé.

17. L'autocuiseur revendiqué selon la revendication 15, où le contrôleur (110) contrôle la deuxième durée comme étant dépendante d'une sortie du corps chauffant à la vapeur (50).

18. L'autocuiseur revendiqué selon la revendication 15, où le contrôleur (110) contrôle le corps de chauffage à la vapeur (50) pour une exploitation de manière à ce que de la vapeur soit générée lorsque le niveau d'eau minimum prédéterminé ou un niveau d'eau plus élevé que le niveau d'eau minimum prédéterminé dans le conteneur de vapeur (40) est détecté par le capteur de niveau d'eau (70).

19. L'autocuiseur revendiqué selon la revendication 15, où le contrôleur (110) contrôle un message de supplément d'eau devant être affiché pour un utilisateur lorsque le niveau d'eau minimum prédéterminé (40) n'est pas détecté par le capteur de niveau d'eau (70) après l'approvisionnement en eau de la première durée.

20. L'autocuiseur revendiqué selon la revendication 19, où le contrôleur (110) contrôle un message d'absence d'eau devant être affiché lorsque le niveau d'eau minimum prédéterminé dans le conteneur de vapeur (40) n'est pas détecté par le capteur de niveau d'eau (70) alors que le message de supplément d'eau est affiché pour une troisième durée prédéterminée.

21. L'autocuiseur revendiqué selon la revendication 20, où le contrôleur (110) stoppe l'approvisionnement en eau lorsqu'un point de durée où le message d'absence d'eau est affiché est une utilisation initiale, et contrôle l'approvisionnement en eau et l'arrêt de l'utilisation de l'autocuiseur électrique (50) lorsque le point de durée n'est pas une utilisation initiale.
